# EUROPEAN PATENT APPLICATION

(11) **EP 4 425 208 A1**
(43) Date of publication of application: **04.09.2024**
(21) Application number: 21962352.7
(22) Date of filing: 26.10.2021
(51) Int. Cl.: G01S 7/32, G01S 13/04, G01S 13/931

(54) **DETECTION METHOD AND SENSOR SYSTEM**

(71) Applicant: Fuji Corporation, Chiryu-shi, Aichi 472-8686 (JP)
(72) Inventor: NISHIGAKI Reiji, Chiryu-shi, Aichi 472-8686 (JP)
(74) Representative: Grünecker Patent- und Rechtsanwälte PartG mbB
(86) International application number: PCT/JP2021/039456
(87) International publication number: WO 2023/073803

(57) **Abstract**

A detection method for comparing a detection value of a radar sensor with a threshold to detect an object, the detection method includes a step of executing first detection processing for detecting presence or absence of an object in a detection region using a first threshold as the threshold; and a step of executing second detection processing for detecting, when an object is detected in the first detection processing, presence or absence of an object using a second threshold having a detection sensitivity higher than a detection sensitivity of the first threshold, in a specific region that is near a detection position of the object and that is on a side of the radar sensor in the detection region.

## Description

### Technical Field

The present description discloses a detection method and a sensor system.

### Background Art

Conventionally, a method for detecting a nearby obj ect by transmitting a radio wave from a radar sensor mounted on a vehicle or the like and comparing a detection value generated by receiving a reflected wave thereof with a threshold is known. For example, in Patent Literature 1, an object is detected using a standard threshold in a normal state, and when an object having low reflection intensity such as a pedestrian is detected, an object is detected using a threshold lower than the standard threshold.

### Patent Literature

Patent Literature 1: JP-A-2006-284293

### Summary of the Invention

### Technical Problem

As described above, by decreasing the threshold when an object with low reflection intensity is detected, it is possible to appropriately detect the object with low reflection intensity while preventing erroneous detection of noise or the like in a normal state as much as possible. However, decreasing the threshold tends to increase erroneous detection due to influence of noise. Therefore, in order to suppress the influence of noise in a state where the threshold is decreased, further improvement is required.

A main object of the present disclosure is to suppress the influence of noise to improve detection accuracy by appropriately changing a threshold for object detection.

### Solution to Problem

The present disclosure employs the following means in order to achieve the main object described above.

A detection method for the present disclosure is
a detection method for comparing a detection value of a radar sensor with a threshold to detect an object,
the detection method includes
a step of executing first detection processing for detecting presence or absence of an object in a detection region using a first threshold as the threshold; and
a step of executing second detection processing for detecting, when an object is detected in the first detection processing, presence or absence of an object using a second threshold having a detection sensitivity higher than a detection sensitivity of the first threshold, in a specific region that is near a detection position of the object and that is on a side of the radar sensor in the detection region.

In the detection method for the present disclosure, when an object is detected in the first detection processing using the first threshold, the second detection processing for detecting the presence or absence of the object in the specific region using the second threshold having the high detection sensitivity is executed. In the second detection processing, the specific region is limited not to an entire region near the object but to the region near the object and on the side of the radar sensor, so that it is possible to minimize the influence of noise while detecting with high accuracy that a small part accompanying the object is positioned on the side of the radar sensor. Accordingly, by appropriately changing the threshold for object detection, it is possible to suppress the influence of noise and improve the detection accuracy.

### Brief Description of Drawings

Fig. 1 is a configuration diagram illustrating a schematic configuration of vehicle 10 including sensor system 20.
Fig. 2 is a configuration diagram illustrating a schematic configuration of radar sensor 21.
Fig. 3 is a flowchart illustrating an example of data analysis processing.
Fig. 4 is a flowchart illustrating an example of detection processing.
Fig. 5 is a diagram illustrating an example of an outline of CFAR processing.
Fig. 6 is a diagram illustrating an example of detection region A and a detection sensitivity.
Fig. 7 is a diagram illustrating an example of detection region A, specific region As, and the detection sensitivity.
Fig. 8 is a flowchart illustrating an example of data analysis processing according to a modification example.
Fig. 9 is a flowchart illustrating an example of re-detection processing.
Fig. 10 is a flowchart illustrating an example of detection processing according to a modification example.

### Description of Embodiments

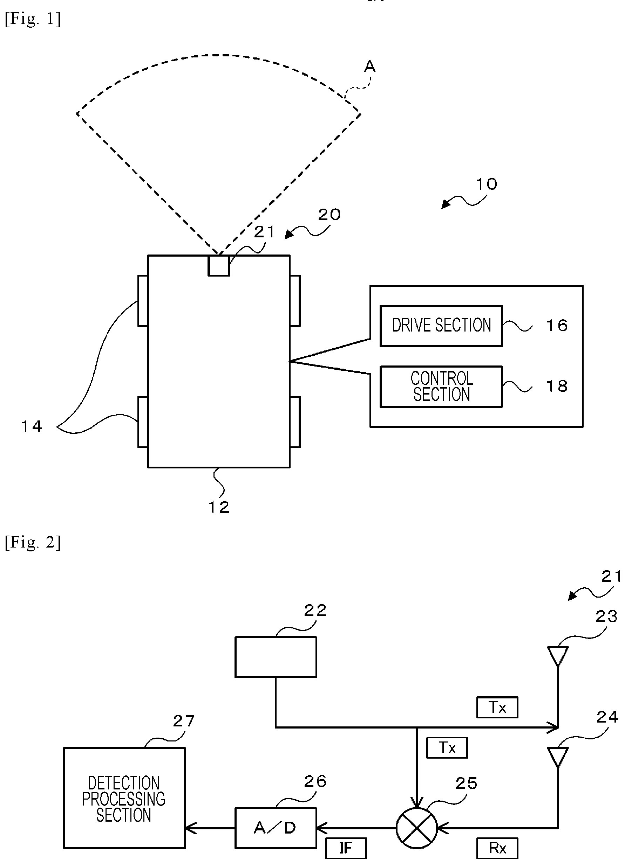

Next, embodiments of the present disclosure will be described with reference to the accompanying drawings. Fig. 1 is a configuration diagram illustrating a schematic configuration of vehicle 10 including sensor system 20. Fig. 2 is a configuration diagram illustrating a schematic configuration of radar sensor 21.

Vehicle 10 is configured to travel while avoiding a collision with an object such as a person or a structure around vehicle 10 and convey an article or the like. Vehicle 10 may automatically travel to a destination along a predetermined route, or may autonomously travel to the destination while freely changing the route according to a traveling situation. As illustrated in Fig. 1, vehicle 10 includes vehicle body 12 provided with multiple wheels 14 for traveling, and sensor system 20 including radar sensor 21 provided at a front portion of vehicle body 12. Sensor system 20 may include multiple radar sensors 21 provided on a side portion, a rear portion, or the like of vehicle body 12.

Vehicle body 12 includes drive section 16 and control section 18 that controls entire vehicle 10. Drive section 16 includes a motor that rotationally drives wheels 14, a steering mechanism, a battery that supplies electric power to the motor, and the like. A detection result is input to control section 18 from sensor system 20 (radar sensor 21). In addition, control section 18 outputs a control signal to drive section 16 so that vehicle 10 travels while avoiding a collision with a detected object or temporarily stops in order to avoid a collision based on the input detection result.

Radar sensor 21 is configured as a sensor using, for example, a millimeter-wave radar, and detects presence or absence or the like of an object in detection region A in front of vehicle 10. Radar sensor 21 employs, as a detection system, a frequency-modulated continuous wave (FMCW) system in which a continuous wave of a frequency-modulated chirp signal is transmitted and received using a radio wave. The detection system may be another system such as a pulse system.

As illustrated in Fig. 2, radar sensor 21 includes signal generation section 22, transmission antenna 23, reception antenna 24, mixer 25, AD conversion section 26, and detection processing section 27. Signal generation section 22 generates and outputs transmission signal Tx that is a continuous wave of a frequency-modulated signal. Transmission antenna 23 outputs a transmission wave based on transmission signal Tx generated by signal generation section 22. Reception antenna 24 receives a reflected wave transmitted from transmission antenna 23 and reflected by an object, and outputs reception signal Rx. Radar sensor 21 includes multiple transmission antennae 23 and multiple reception antennae 24.

Mixer 25 performs frequency conversion on a signal obtained by inputting and mixing transmission signal Tx and reception signal Rx to generate and output signal IF whose frequency is reduced to an intermediate frequency. AD conversion section 26 outputs data obtained by converting signal IF output from mixer 25 into a digital signal. Detection processing section 27 is a microcomputer including CPU, ROM, RAM, and the like (not shown). Detection processing section 27 inputs data (digital signal) output from AD conversion section 26 and executes fast Fourier transform (FFT) processing, constant false alarm rate (CFAR) processing, and the like. Through the processing of detection processing section 27, presence or absence of an object, a distance to an object, a relative speed, an angle, and the like are detected.

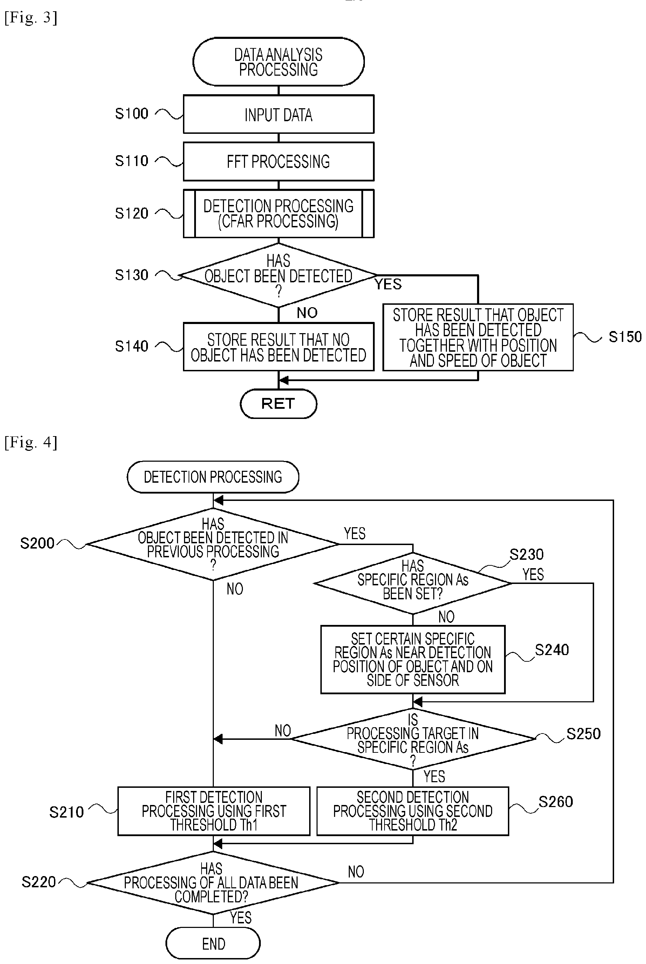

Next, processing in which detection processing section 27 of radar sensor 21 analyzes data and detects an object will be described. Fig. 3 is a flowchart illustrating an example of data analysis processing. The data analysis processing is executed by detection processing section 27 in each predetermined detection period such as several tens of milliseconds. Detection processing section 27 first inputs the above-described data, which is a digital signal of signal IF, from AD conversion section 26 (S100). Next, detection processing section 27 performs FFT processing on the input data (S110) and performs detection processing for an object (S120). Detection processing section 27 performs well-known processing such as detecting a distance to an object by FFT processing on the input data, detecting a speed of an object by FFT processing on a result thereof, and further detecting an angle by FFT processing on the result. Although the detection processing in S120 will be described later, presence or absence of an object is detected, for example, by performing CFAR processing in which a detection value subjected to FFT processing is compared with a threshold.

Subsequently, detection processing section 27 determines whether an object has been detected in the detection processing of S120 (S130), and when it is determined that an object has not been detected, detection processing section 27 stores a result that no object has been detected in a storage section such as RAM (S140), and ends the data analysis processing. On the other hand, when it is determined that an object has been detected, detection processing section 27 stores the result that the object has been detected in the storage section such as the RAM together with position information such as a distance and an angle of the object and speed information such as a relative speed (S150), and ends the data analysis processing.

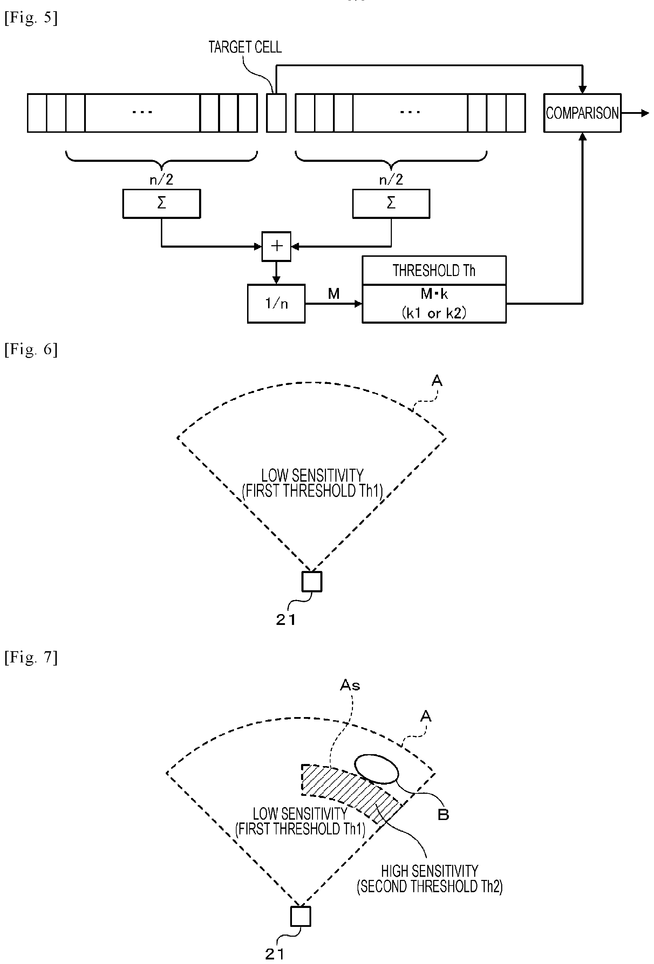

Next, details of the detection processing of S120 will be described. Fig. 4 is a flowchart illustrating an example of the detection processing, and Fig. 5 is a diagram illustrating an example of an outline of the CFAR processing. Fig. 5 illustrates Cell-Averaging CFAR processing, but the present disclosure is not limited thereto. In the CFAR processing, for example, a detection value subjected to the FFT processing is used as a target cell (target value) of the processing, is subsequently compared with threshold Th, and detection indicating that there is an object is made when the detection value exceeds threshold Th. As the detection value subjected to the FFT processing, for example, a detection value for a distance is used. Therefore, cells in Fig. 5 are arranged in order of distance from radar sensor 21. Threshold Th in the CFAR processing is set by a known method as follows. That is, among multiple reference cells (reference values) on both sides of the target cell, average value M obtained by dividing a total value of a sum of n/2 values on a left side and a sum of n/2 values on a right side by number n is calculated, and average value M is multiplied by coefficient k to set threshold Th. In the present embodiment, coefficient k1 and coefficient k2 smaller than coefficient k1 are stored as coefficient k in a storage section such as ROM. The CFAR processing is not limited to being achieved by software, and may be achieved by hardware.

In the detection processing of Fig. 4, detection processing section 27 first determines whether an object has been detected in previous data analysis processing (S200). This determination is performed based on the result stored in either S140 or S150 of the previous data analysis processing. In a case such as beginning of data analysis processing where there is no previous result, it is determined in S200 that an object has not been detected. When it is determined that an object has not been detected, detection processing section 27 executes first detection processing of detecting presence or absence of an object using first threshold Th1 as threshold Th of the CFAR processing (S210).

In the present embodiment, first threshold Th1 is set by multiplying above-described average value M by coefficient k1, and it is determined that there is detection when the value of the target cell exceeds first threshold Th1, and it is determined that there is no detection when the value of the target cell is equal to or less than first threshold Th1. Coefficient k1 has been determined such that first threshold Th1 is a value suitable for detecting a relatively large part such as a torso in a body of a person. Further, since coefficient k1 is a value larger than coefficient k2, threshold Th (first threshold Th1) larger than threshold Th when average value M is multiplied by coefficient k2 is set. Therefore, since the value of the target cell is less likely to exceed threshold Th, a detection sensitivity is a low sensitivity. When detection processing section 27 executes the first detection processing of S210, detection processing section 27 determines whether processing of all data (target cell) has been completed (S220), and when it is determined that the processing has not been completed, detection processing section 27 returns to S200 and repeats the processing. Further, when it is determined in S220 that the processing of all data has been completed, detection processing section 27 ends the detection processing.

Fig. 6 is a diagram illustrating an example of detection region A and the detection sensitivity. Fig. 6 illustrates a case where the previous result indicates no detection. In this case, as illustrated, the detection processing is performed using first threshold Th1, which is a low sensitivity, in entire detection region A. Therefore, it is possible to detect a relatively large part such as a torso while preventing erroneous detection due to the influence of noise, and thus it is possible to appropriately detect that a person has entered detection region A.

When it is determined in S200 of Fig. 4 that an object has been detected in the previous data analysis processing, detection processing section 27 determines whether specific region As that is a partial region of detection region A has been set (S230). When it is determined that specific region As has not been set, detection processing section 27 sets specific region As having a certain size near a detection position of the object detected in the previous data analysis processing and on a side of radar sensor 21 (S240). The detection position of the object is based on the position information such as the distance and angle of the object stored in S150 of the previous data analysis processing. Subsequently, detection processing section 27 determines whether a position of the current processing target, that is, the target cell is in specific region As (S250). When it is determined that the processing target is not in specific region As, detection processing section 27 proceeds to S210 and executes the first detection processing using first threshold Th1. On the other hand, when it is determined that the processing target is in specific region As, detection processing section 27 executes second detection processing of detecting presence or absence of an object using second threshold Th2 as threshold Th (S260), and proceeds to S220.

In the present embodiment, second threshold Th2 is set by multiplying above-described average value M by coefficient k2, and it is determined that there is detection when the value of the target cell exceeds second threshold Th2, and it is determined that there is no detection when the value is equal to or less than second threshold Th2. Coefficient k2 has been determined such that second threshold Th2 is a value suitable for detecting a relatively small part such as a hand or an arm. Further, since coefficient k2 is a value smaller than coefficient k1, second threshold Th2 smaller than first threshold Th1 is set. Therefore, since the value of the target cell is likely to exceed threshold Th, the detection sensitivity is a high sensitivity.

Fig. 7 is a diagram illustrating an example of detection region A, specific region As, and the detection sensitivity. Fig. 7 illustrates a case where torso B of a person is detected as a previous result. As illustrated, specific region As is set near torso B and on the side of radar sensor 21. Therefore, when the processing target is in specific region As, the second detection processing is performed using second threshold Th2, and when the processing target is outside specific region As, the first detection processing is performed using first threshold Th1. In specific region As where the detection sensitivity is a high sensitivity, it is possible to appropriately detect a relatively small part such as a hand or an arm of a person. That is, in a state where torso B is detected, it is possible to appropriately detect that a hand, an arm, or the like of the person is positioned on the side of radar sensor 21, and to prevent the hand or the arm from coming into contact with vehicle 10. Further, since the first detection processing is executed outside specific region As, the influence of noise can be minimized. In addition, in specific region As, although the influence of noise may occur, since the processing is limited processing for improving safety when torso B is detected, it is less likely to be a significant problem. Accordingly, it is possible to detect the hand, the arm, or the like of the detected person (torso B) with high accuracy while suppressing the influence of noise.

Here, a correspondence relationship between the elements of the present embodiment and the elements of the present disclosure will be clarified. Radar sensor 21 of the present embodiment corresponds to a radar sensor, and detection processing section 27 corresponds to a detection processing section.

In sensor system 20 described above, when the object is detected in the first detection processing using first threshold Th1, the presence or absence of the object is detected in the second detection processing using second threshold Th2 so that the detection sensitivity is high in specific region As near the detected object and on the side of radar sensor 21. Therefore, it is possible to detect with high accuracy that the small part accompanying the detected object is positioned on the side of radar sensor 21 while minimizing the occurrence of the influence of noise.

Further, since first threshold Th1 is used in the first detection processing so that torso B of a person is detectable, and second threshold Th2 is used in the second detection processing so that a hand or an arm of the person is detectable, it is possible to suppress the influence of noise to detect a relatively small part such as the hand or the arm with high accuracy in a state where torso B of the person is detected.

When the object is detected in the first detection processing, the second detection processing is executed on specific region As in a next detection period. Therefore, it is possible to appropriately detect the small part accompanying the object in the next detection period while preventing processing in the same detection period from being redundant.

It is needless to say that the present disclosure is not limited to the embodiment described above in any way, and hence may be practiced in various ways as long as it falls within the technical scope of the present disclosure.

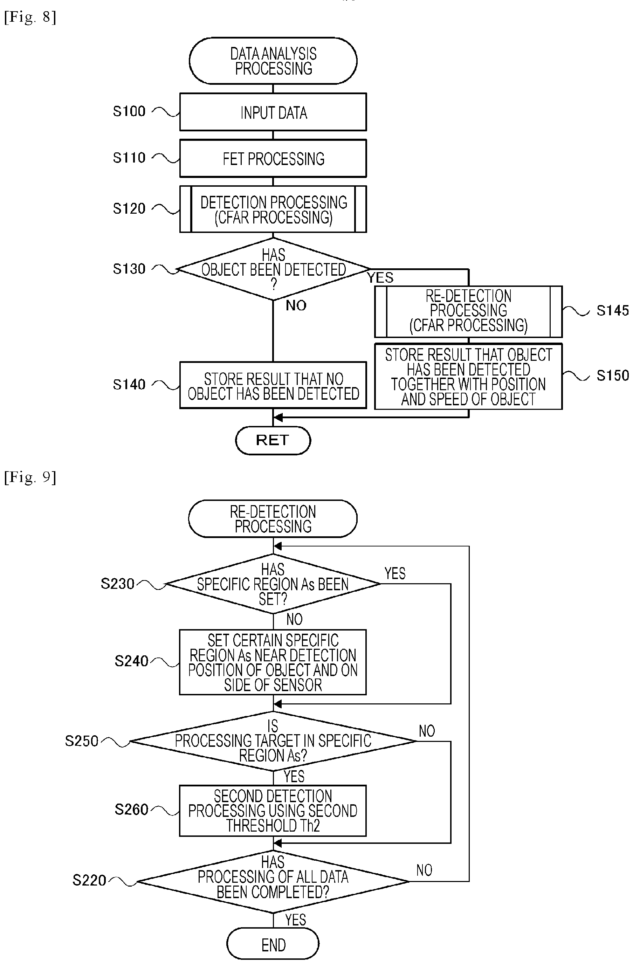

In the embodiment described above, when the object is detected in the first detection processing, the second detection processing is executed on specific region As in the next detection period, but the present disclosure is not limited thereto, and may be practiced as in a following modification example. Fig. 8 is a flowchart illustrating an example of data analysis processing according to the modification example. In the following modification example, the same processing as in the embodiment is given the same step number, and description thereof will be omitted.

In the modification example of Fig. 8, when it is determined in S130 that the object has been detected, detection processing section 27 executes re-detection processing illustrated in Fig. 9 (S145). The re-detection processing of Fig. 9 is executed in the same manner except that a part of the detection processing (S200, S210) of S120 (Fig. 4) is not performed. That is, detection processing section 27 sets specific region As when specific region As has not been set (S230, S240), and executes the second detection processing when the processing target is in specific region As (S250, S260). In this way, in the modification example, the second detection processing is executed for specific region As for the object in the same detection period as the data analysis processing in which the object is detected. Here, depending on the detection position and the relative speed of the person (torso B), when the second detection processing is executed after waiting for the next detection period, a concern for contact or collision of a hand, an arm, or the like may increase. That is, when safety is emphasized, a time for waiting for the next detection period may be undesirable. Therefore, by executing the re-detection processing (second detection processing) in the same detection period as in the modification example, it is possible to aim to appropriately detect a hand, an arm, or the like to improve safety.

On the other hand, when the re-detection processing is executed in the same detection period as in the modification example, since the detection processing is executed twice in S120 and S145, there is a concern that the data analysis processing takes time, which leads to processing delay. Therefore, based on, for example, the detection position of the object (torso B), detection processing section 27 may execute the re-detection processing when the detection position is in a predetermined distance from radar sensor 21, and need not execute the re-detection processing when the detection position is outside the predetermined distance.

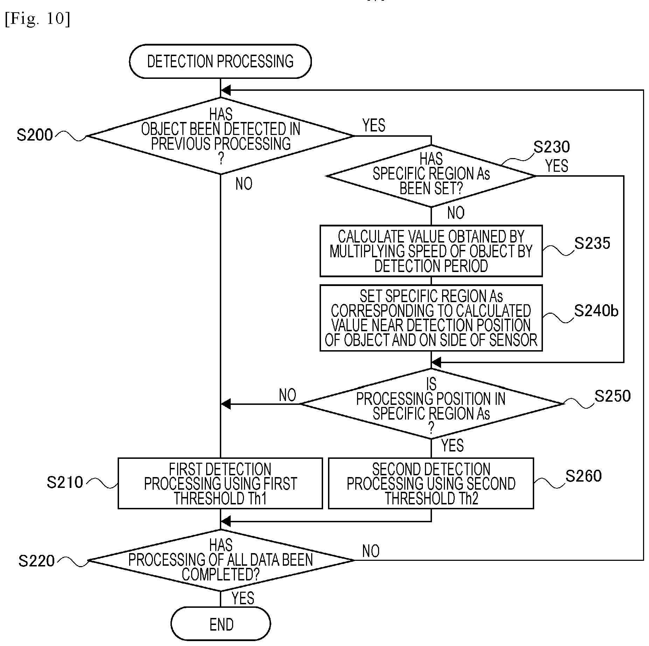

In the embodiment, a certain region near the detection position of the object and on the side of radar sensor 21 is set as specific region As, but the present disclosure is not limited thereto. Fig. 10 is a flowchart illustrating an example of detection processing according to a modification example. In this detection processing, when it is determined in S230 that specific region As has not been set, detection processing section 27 calculates a value obtained by multiplying the relative speed of the object based on the previous detection result by the detection period (time) (S235). The relative speed of the object is based on the speed information stored in S 150 of the previous data analysis processing. The value obtained by multiplying the relative speed by the detection period corresponds to the movement distance of the object. Subsequently, detection processing section 27 sets specific region As corresponding to the calculated value of S235 near the detection position of the object and on the side of radar sensor 21 (S240b), and executes subsequent processing. Here, in S240b, specific region As may be set so as to include at least a region corresponding to the movement distance of the object (torso B) as the calculated value. Specific region As may be set by further adding a region that a hand, an arm, or the like can reach to the region corresponding to the movement distance. In this modification example, since the second detection processing is executed in appropriate specific region As reflecting the movement distance of the object, it is possible to further improve the detection accuracy while suppressing the influence of noise more appropriately.

In the embodiment, in the first detection processing, first threshold Th1 is used so that torso B of the person is detectable, and in the second detection processing, second threshold Th2 is used so that a hand or an arm of the person is detectable, but the present disclosure is not limited thereto. In the first detection processing, a threshold at which a relatively large part of the object is detectable need only be used, and in the second detection processing, a threshold at which a detection sensitivity is higher than that in the first detection processing need only be used. In addition, in the detection processing, it is determined that there is detection of an object when the threshold is exceeded in the CFAR processing, but the present disclosure is not limited thereto, any processing in which the detection value of radar sensor 21 and the threshold are compared with each other to detect presence or absence of an object may be adopted.

In the embodiment, a configuration in which radar sensor 21 is used for vehicle 10 has been illustrated, but the present disclosure is not limited thereto, radar sensor 21 may be used for another moving body other than vehicle 10 or may be used for various work robots or the like other than vehicle 10.

Here, a detection method for the present disclosure may be as follows. In the detection method for the present disclosure, the first threshold may be used in the first detection processing so that a torso of a person is detectable as an object, and the second threshold may be used in the second detection processing so that a hand or an arm of the person is detectable as an object. This makes it possible to detect a relatively small part such as a hand or an arm with high accuracy while suppressing the influence of noise in a state where the torso of the person is detected.

In the detection method according to the present disclosure, detection processing may be executable in each predetermined detection period, and when an object is detected in the first detection processing, the second detection processing may be executed in the specific region in a next detection period. This makes it possible to appropriately detect a small part accompanying the object by reflecting the previous detection result in the detection processing in the next detection period.

In the detection method for the present disclosure, detection processing may be executable in each predetermined detection period, and when an object is detected in the first detection processing, the second detection processing may be executed in the specific region in the same detection period. This makes it possible to quickly detect a small part accompanying the object without waiting for a next detection period.

In the detection method for the present disclosure, in the first detection processing, a relative speed of the object with respect to the radar sensor may be detectable from the detection value when the object is detected, and in the second detection processing, the specific region may be determined based on a value obtained by multiplying the relative speed by the predetermined detection period. This makes it possible to improve the detection accuracy while suppressing the influence of noise more appropriately since the second detection processing is executed in the appropriate specific region reflecting the movement distance of the object.

A sensor system of the present disclosure is
a sensor system for comparing a detection value of a radar sensor with a threshold to detect an object,
the sensor system includes
a detection processing section configured to execute
first detection processing for detecting presence or absence of an object in a detection region using a first threshold as the threshold, and
second detection processing for detecting, when an object is detected in the first detection processing, presence or absence of an obj ect using a second threshold having a detection sensitivity higher than a detection sensitivity of the first threshold, in a specific region that is near a detection position of the object and that is on a side of the radar sensor in the detection region.

The sensor system of the present disclosure can improve the detection accuracy by suppressing the influence of noise by appropriately changing the threshold for object detection, similarly to the above-described detection method. In this sensor system, various aspects of the detection method may be adopted, or a configuration for achieving each step of the detection method may be added.

### Industrial Applicability

The present disclosure can be used in a technical field such as detection of an object using a radar sensor.

### Reference Signs List

10 vehicle, 12 vehicle body, 14 wheel, 16 drive section, 18 control section, 20 sensor system, 21 radar sensor, 22 signal generation section, 23 transmission antenna, 24 reception antenna, 25 mixer, 26 AD conversion section, 27 detection processing section, A detection region, As specific region, B torso

## Claims

1. A detection method for comparing a detection value of a radar sensor with a threshold to detect an object, the detection method comprising:
a step of executing first detection processing for detecting presence or absence of an object in a detection region using a first threshold as the threshold; and
a step of executing second detection processing for detecting, when an object is detected in the first detection processing, presence or absence of an object using a second threshold having a detection sensitivity higher than a detection sensitivity of the first threshold, in a specific region that is near a detection position of the object and that is on a side of the radar sensor in the detection region.

2. The detection method according to Claim 1,
wherein the first threshold is used in the first detection processing so that a torso of a person is detectable as an object, and
the second threshold is used in the second detection processing so that a hand or an arm of the person is detectable as an object.

3. The detection method according to Claim 1 or 2,
wherein detection processing is executable in each predetermined detection period, and
when an object is detected in the first detection processing, the second detection processing is executed in the specific region in a next detection period.

4. The detection method according to Claim 1 or 2,
wherein detection processing is executable in each predetermined detection period, and
when an object is detected in the first detection processing, the second detection processing is executed in the specific region in the same detection period.

5. The detection method according to any one of Claims 1 to 4,
wherein, in the first detection processing, a relative speed of the object with respect to the radar sensor is detectable from the detection value when the object is detected, and
in the second detection processing, the specific region is determined based on a value obtained by multiplying the relative speed by the predetermined detection period.

6. A sensor system for comparing a detection value of a radar sensor with a threshold to detect an object, the sensor system comprising:
a detection processing section configured to execute
first detection processing for detecting presence or absence of an object in a detection region using a first threshold as the threshold, and
second detection processing for detecting, when an object is detected in the first detection processing, presence or absence of an obj ect using a second threshold having a detection sensitivity higher than a detection sensitivity of the first threshold, in a specific region that is near a detection position of the object and that is on a side of the radar sensor in the detection region.
